# EUROPEAN PATENT APPLICATION

(11) **EP 1 901 165 A2**
(43) Date of publication of application: **19.03.2008**
(21) Application number: 07253458.9
(22) Date of filing: 31.08.2007
(51) Int. Cl.: G06F 9/45

(54) **System and method for generating object code for map-reduce idioms in multiprocessor system**

(30) Priority: 06.09.2006 US 516292
(71) Applicant: Intel Corporation, Santa Clara, CA 95052 (US)
(72) Inventor: Liao, Shih-wei, San Jose, CA 95134 (US); Chen, Guilin, San Jose, CA 95134 (US); Huang, Bo, Shanghia 200063 (CN)
(74) Representative: Beresford, Keith Denis Lewis

(57) **Abstract**

Methods and systems are provided for recognizing and processing reduction operations to optimize generated binary code for execution in a multiprocessor computer system. Reduction operations facilitate data parallelism whereby each processing thread contributes a value and the values are reduced using a function to obtain and return a reduced value to each of the threads. Embodiments of an idiom-based interprocedural compiler provide a unified framework for processing both implicit and explicit reductions. The compiler integrates explicit reductions and implicit reductions by providing a uniform intermediate format. The compiler resolves dependencies among processing threads within program code by checking for privatization of dependent threads or parallelizing reduction idioms within the threads, and generates parallelized object code for execution in a multiprocessor computer.

## Description

### BACKGROUND

Embodiments are in the field of computer programs, and particularly in the field of compilers for generating executable code for multiprocessor computer systems.

The need for ever-increasing processing power has led to radical parallelism in the design of modern microprocessors. To increase parallelism, certain microprocessors or Central Processing Units (CPUs) incorporate multiple processing cores per CPU socket. Present multi-core processors can incorporate from two to 32 separate cores per CPU, though greater numbers of processor cores per socket can also be integrated. For purposes of the following discussion, the terms multiprocessor system and multicore processor or processing system refer interchangeably to a computer system that includes at least one microprocessor or CPU with more than one processing unit.

To leverage the power of multiprocessing hardware, map-reduce idioms, which map specific compute processes to specific processor cores, should be exploited. To further take advantage of the full processing capabilities provided by multicore processors, applications must themselves be parallelized. This requires the use of compilers that can effectively generate such parallel application code that can take advantage of all of the processing cores on a die, as well as the capabilities of map-reduce idioms and parallelized languages. Often the tasks of a parallel job compute sets of values that are reduced to a single value or gathered to build an aggregate structure. In general, reduction operations are an important aspect of data parallelism in which each processing thread contributes a value and the values are reduced using a function to obtain and return a reduced value to each of the threads. Since reductions may introduce dependencies, most languages separate computation and reduction. For example, Fortran 90 and HPF (High Performance Fortran) may provide a rich set of predefined (explicit) reduction functions, but only for certain data structures. Often, reductions for important multiprocessing functions, such as complex index arrays, are not provided.

Implicit reductions are also prevalent in the high performance computing (HPC) domain. Recognizing implicit reductions in traditional languages and parallelizing them is essential for achieving high performance on multiprocessors. Present compiler or code generation systems, however, generally do not optimally handle both explicit and implicit reductions that may be present in languages, such as Brook, C and Fortran. Furthermore, although present compilers may provide some degree of parallelization, such compilers perform dependency analysis, which requires knowledge of every memory access. This allows only rudimentary parallelization. Present compilers typically only recognize linear patterns (affine groups), and cannot effectively process non-linear patterns.

Furthermore, present methods of generating parallelized application code typically do not take advantage of some of the inherent parallel structures present in map-reduced languages or languages that employ map-reduce idioms. For example, present reduction methods typically lack the ability to locate reduction in array regions, even in the presence of arbitrarily complex data dependences, such as reductions on indirect array references through index arrays. Present reduction methods also typically cannot locate interprocedural reductions, that is, reduction operations that span multiple procedures, such as those that might occur in certain computationally-intensive loops.

### BRIEF DESCRIPTION OF THE DRAWINGS

**Figure 1** is a block diagram of a multicore computer system executing a map-reduce idiom application generated by a compiler, according to an embodiment.
**Figure 2** is a flow diagram that illustrates a method of parallelizing implicit and explicit reductions for use in a multicore computer system, under an embodiment.
**Figure 3** is a flow diagram that illustrates a method of generating parallelized binary code using a compiler, according to an embodiment.
**Figure 4** is a flow diagram that illustrates a method of performing an interprocedural analysis in order to generate parallelized code, under an embodiment.

### DETAILED DESCRIPTION

Embodiments described herein disclose a compiler, or similar code generator, for recognizing and processing reduction operations to optimize the generated binary code for execution in a multiprocessor computer system. In general, reduction operations are an important aspect of data parallelism in which each processing thread contributes a value and the values are reduced using a function to obtain and return a reduced value to each of the threads. Embodiments of an idiom-based interprocedural compiler provide a unified framework for processing both implicit and user-defined reductions. Disclosed embodiments are generally able to integrate explicit reductions and to parallelize interprocedural and sparse reductions.

Reduction operations are typically common in streaming applications, financial computing, and applications in the High Productivity Computing (HPC) domain. In certain languages, such as Fortran and C, the ability to recognize implicit reductions is important for parallelization in multiprocessor systems. Some recently developed languages, such as the Brook Streaming language and the Chapel language allow users to specify reduction functions. Such implicit and explicit parallel languages can include many idioms (or patterns), including map-reduce idioms. Embodiments of a compiler, or similar code generator, provide a unified framework for processing both implicit and user-defined reductions. Both types of reductions are propagated and analyzed interprocedurally. Methods within an embodiment can enhance the scope of user-defined reductions and parallelize coarser-grained reductions.

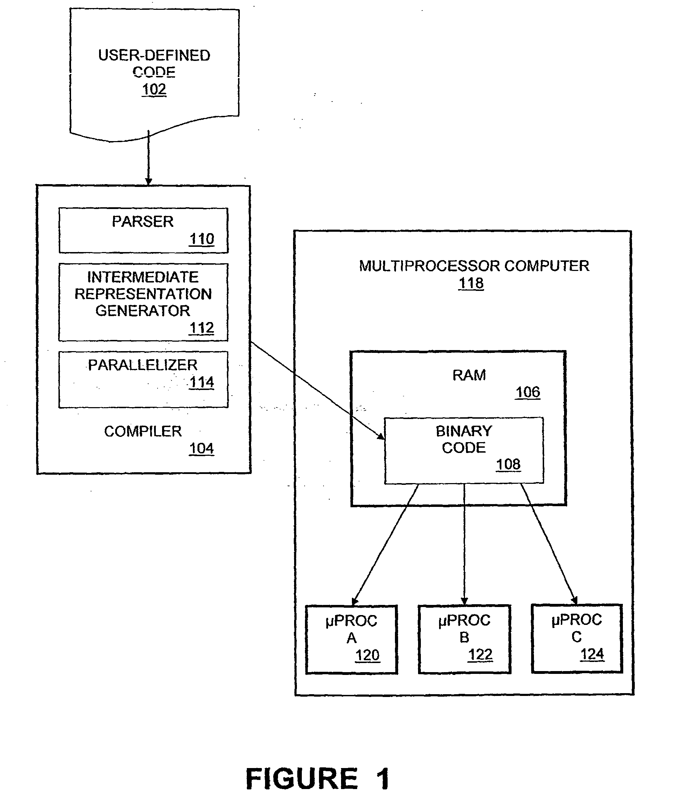

In general, a reduction is the application of an associative operation to combine a data set. Reduction recognition and checking is an important component of enabling parallelism on multicore computer systems and computer systems that can execute a map-reduced application or program having map-reduce idioms. Figure 1 is a block diagram of a multicore computer system executing a map-reduced application generated by a compiler, according to an embodiment. A multicore or multiprocessor computer system is a computer system that includes more than one processing unit or core per CPU. Thus, as illustrated in Figure 1, multiprocessor computer 118 includes a number of separate microprocessor components denoted microprocessor A, 120, microprocessor B, 122, and microprocessor C, 124. Each microprocessor component 120, 122, and 124 is a fully functioning processing unit that can be configured or programmed to execute by itself, or in conjunction with any of the other microprocessors. Parallelized code is program code that is configured to run on more than one processor at the same time in order to reduce overall program execution time. It should be noted that although three microprocessing units are shown, any number of different microprocessing units, such as between two and 32 could be included in the multiprocessor computer 118.

The multiprocessor computer 118 of Figure **1** represents a portion of a computer, and may be embodied on one or more motherboards, or integrated circuit devices comprising at least some other components. For example, computer 118 may include a memory controller, an interface controller, a bus coupling the components of the computer, as well as a number of buffers and similar circuitry for coupling the computer directly or indirectly to one or more on-board or off-board peripheral devices or networks.

In Figure 1, user defined code 102 representing a program or a portion of a program written in a high-level computer program such as Fortran, C, and so on, is transformed into one or more executable modules through a compiler 104. Compiler 104 generally represents a computer program, set of programs, or logic circuit that is configured to transform high level source code into executable binary code 108. The compiler 104 of Figure 1 includes subcomponents, such as parser 110, intermediate representation generator 112, and parallelizer 114. Other compiler components, not shown, can also be included, such as a pre-processor, semantic analyzer, code optimizer, and so on. Parser 110 takes as input the user-defined code and determines its grammatical structure with respect to a given formal grammar, as defined by the high level language. One or more lines of the user-defined code 102 can include one or more user-defined, explicit, or implicit reduction operations. The intermediate representation generator 112 processes the reduction operations to provide a uniform representation for the reduction operations, and the parallelizer component 114 processes the reduction operations and produces parallelized code for optimum execution in multiprocessor computer 118.

The compiler 104 generates binary code 108 that is generally stored in a memory of the computer system 118, such as random access memory (RAM) 106, or similar memory. This binary code can include distinct executable threads that can be separately executed on the different microprocessor units 120, 122, and 124 of the computer 118. In one embodiment, the compiler 104 optimizes the binary code so that reduction operations within the user-defined code 102 are parallelized for execution on different microprocessor components, thus allowing simultaneous, near-simultaneous or overlapping processing of certain segments of the program.

A reduction is the application of an associative operation to combine a data set. The associative property states that the addition or multiplication of a set of numbers is the same regardless of how the numbers are grouped (i.e., a + (b + c) = (a + b) + c, and a * (b * c) = (a * b) * c). Associative operations include addition, multiplication, and finding maxima and minima, among other operations. Because of the associative property of a reduction operation, embodiments of a compiler or similar code generator are configured to reorder the computation, and in particular, to execute portions of the computation in parallel.

Besides being associative, a reduction operation also needs to be a read-modify-write (RMW) operation, which is an operation in which a variable is read, modified, and written back. An example of such an operation is a sum of squares operation, s = s + x[i]², where the variable *s* is modified and written back.

A reduction can be explicit or implicit. An explicit reduction is usually specified in the computer language itself, or in a library Application Program Interface (API), while an implicit reduction requires detection by the compiler or a runtime analysis process. Certain languages, such as OpenMP support reduction clauses (idioms), while other languages, such as MPI and HPF provide reduction libraries. Other languages, such as the Brook Streaming language and the Chapel language allow users to specify reduction functions. For example, identity, accumulating, and combining functions can be specified in Chapel, which is used for High Productivity Computing (HPC) Systems.

To unify the processing of both explicit and implicit reductions, embodiments include a compiler that detects implicit reductions, checks explicit reductions, and represents both implicit and user-defined reductions uniformly in an intermediate representation (IR). Both implicit and user-defined reductions are propagated and analyzed globally. In one embodiment, the intermediate representation comprises a set of address fields that specifies a first source address, a second source address, and a destination address, as well as a field that specifies an operation or a set of sequences based on one or more operations.

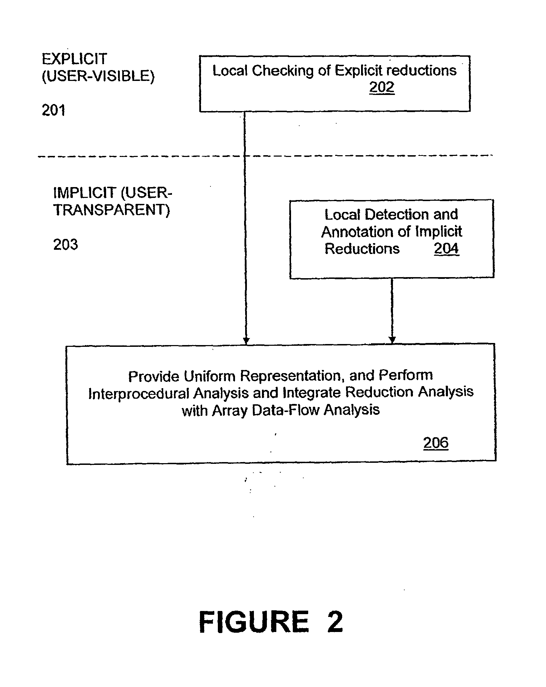

**Figure 2** is a flow diagram that illustrates the main processes of parallelizing implicit and explicit reductions for use in multiprocessing computer systems, under an embodiment. As illustrated in Figure 2, a process under an embodiment operates on explicit reductions 201 that are user-defined or defined by the language itself (user-visible), as well as implicit reductions 203, which are transparent to the user. As shown in Figure 2, a compiler, or similar code generator, is configured to perform three main operations. First, the process performs a local check of explicit reductions, block 202. User-defined and explicit reductions are annotated and represented in an intermediate representation. Second, the process locally detects and annotates implicit reductions, block 204. Implicit reductions are represented in the same intermediate representation format as the user-defined and explicit reductions. Using the uniform representations for the explicit and implicit reductions, the process performs an interprocedural analysis and checking to obtain the best granularity for the parallelization, block 206. In general, parallelism coverage gives the percentage of the sequential execution time spent in parallelized regions of code, while parallelism granularity is the average length of computation between synchronizations in the parallel regions. Typically, coarse granularity is more desirable to improve computing performance in multiprocessor systems.

In one embodiment, the reduction detection process finds reductions on both scalar and array variables, as well as reduction operations that span multiple procedures, such as those that might be present in computationally-intensive loops.

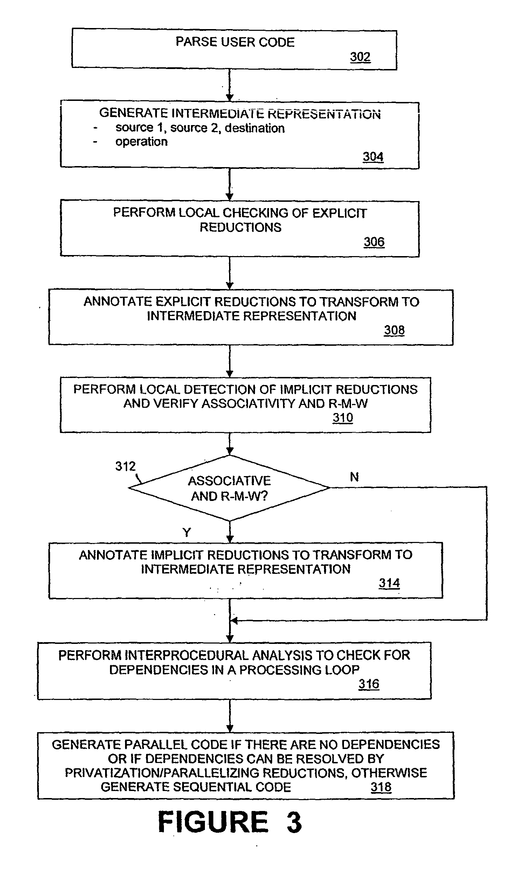

**Figure 3** is a flow diagram that illustrates and summarizes a method of generating parallelized binary code in a compiler, under an embodiment. As shown in block 302, the process starts with the parsing of the user code in parser 110 of compiler 104, and the generation or definition of an intermediate representation, block 304. The process then performs local checking of explicit reductions, block 306. In block 308, any explicit reductions are annotated and transformed into the intermediate representation defined in 304. The process next performs local detection of implicit reductions, as well as a verification of the associative and read-modify-write characteristics of the implicit reductions, block 310. If, in block 312, the implicit reductions are verified to be both associative and read-modify-write operations, the implicit reductions are annotated to conform to the intermediate format corresponding to the explicit reductions, block 314. If the implicit reductions are not associative or read-modify-write operations, then they are not annotated and represented in an intermediate format.

In block 316, the process performs an interprocedural array data-flow analysis, generally in a bottom-up manner to check for dependencies within the code. In general, dependencies within a processing loop indicate a reliance on other processing threads, and thus, if dependencies exist, the code may not be directly parallelizable. In one embodiment, there are two methods of resolving dependencies among arrays or programming threads. One method is to privatize the array so that each processor has its own copy of the array. This allows the array to be processed in parallel by the processors. The other method is to parallelize the reductions. Thus, as shown in block 318, the process generates parallelized code for the one or more loops of the parsed code if there are no dependencies, or if the dependencies can be resolved by privatization or parallelizing the reductions; otherwise the process generates sequential code.

As shown in block 306 of Figure 3, in one embodiment, the code generation system first performs local checking on user-defined or explicit reductions to parallelize the associative functions such as addition, multiplication, and finding minimums and maximums. For example, in the following code segment, the parameter *reduce* is a keyword (such as in the Brook language), *foo* is a first function, and *bar* is another function. The function *foo* is a reduction, but compiling *bar* will produce an error message that identifies bar as a non-associative function (since it is a division operation).

```
       reduce void foo(type(x), reduce int result)
       {
              result = result + x;
       }
       reduce void bar(type(x), reduce int result1)
       {
               result1 = result1 / x;
       }
```

In an intermediate representation, user-defined reductions are represented in annotations. Reduction operators and variables are captured in the annotation. Thus, in the above example code segment, *foo* is annotated with a reduction annotation. Each enclosed program region may have a reduction annotation attached for the result. The annotations are propagated and attached as part of an interprocedural reduction recognition process.

In another example code segment provided below, the result is a reduction variable at the inner loop level, but not at the outer loop level. In this case, the compiler recognizes that the read access to result in the statement S2 makes the variable no longer reducible at the outer loop level. Even if the programmer removes S2, the result is still not reducible at the outer loop level because the statement S I is not reducible.

```
 for (I = 0; I < M; I++) {// no reduction annotation
    bar(C, result); // Statement S1: no reduction annotation
        d = ... result...; // Statement S2
        for (J = 0; J < N; J++) { // reduction annotation on the
 result variable
               foo(B, result); //reduction annotation on the result
 variable
               foo(A, result); // reduction annotation on the result
 variable
                }
        }
```

As shown in the above example, reductions may span across multiple loops or functions. By propagating reduction summaries across program region boundaries, large amounts of code can be parallelized, with lower parallelism overhead. Note that implicit reductions may also span across multiple program regions. In general, parallelizing multiple reductions on the same array interprocedurally is important for achieving scalability and speed improvements on multiprocessors.

With regard to implicit reductions, which are detected as shown in block 310 of Figure 3, embodiments can analyze both scalar reductions and array reductions, as well as multiple updates (read-modify-write operations) to the same variable. For scalar reductions, a summation of an array A[0:N-1] is typically coded as:

```
        for (I = 0; I < N; i++)
                SUM = SUM + A[i];
```

The values of the elements of the array A are reduced to the scalar SUM. As shown in this example, when coded in sequential programming languages, reductions are generally not readily recognizable as commutative operations (where commutative operations are a type of associative operation). However, most parallelizing compilers will recognize scalar reductions such as this accumulation into the variable SUM. In one embodiment, such reductions are transformed to a parallel form by creating a private copy of SUM for each processor, initialized to zero. Each processor updates its private copy with the computation for the iterations of the I loop assigned to it, and following execution of the parallel loop, atomically adds the value of its private copy to the global SUM.

For regular arrays, in order to discover the coarse granularity of parallelism, it is important to recognize reductions that write to not just simple scalar variables, but also to array variables. Reductions on array variables are also common and are a potential source of significant improvements in parallelization results. There are different variations on how array variables can be used in reductions. In one instance, the SUM variable is replaced by an array element, as follows:

```
              for (I = 0; I < N; I++)
                      B[J] = B[J] + A[I];
```

Alternatively, the reduction may write to the entire or a section of an array, as follows:

```
      for (I = 0; I < N; I++) {
              // ... a lot of computation to calculate A(I,1:3)
              for (J = 1; J <= 3; J++)
                      B [J] = B [J] + A [I ,J]
        }
```

In the above example, it is assumed that the calculations of A[I,1:3] for different values of I are independent, then standard data dependence analysis would find that the I loop (the loop with index I) is not parallelizable because all the iterations are reading and writing the same locations B[1:3]. It is possible to parallelize the outer loop by having each processor accumulate to its local copy of the array B and then sum all the local arrays together.

With regard to sparse array reductions, sparse computations generally pose a difficult construct for parallelizing compilers. When arrays are part of subscript expressions, a compiler usually cannot determine the location of the array being read or written. In some cases, loops containing sparse computations can still be parallelized if the computation is recognized as a reduction. In the following example, the only accesses to the sparse vector HISTOGRAM are commutative and associative updates to the same location, so it is safe to transform this reduction to a parallelizable form.

```
       for (I = 0; I < N; i++)
               HISTOGRAM[A[I]] = HISTOGRAM [A[I]] + 1;
```

It is possible to parallelize the code shown above by having each processor compute a part of the array HISTOGRAM and collect the information in a local histogram, and sum the histograms together at the end. A reduction analysis process according to an embodiment, can parallelize this reduction even when the compiler cannot predict the locations that are written.

After the process of checking and representing explicit and implicit reductions in a uniform format (intermediate representation), the method then performs a process of reduction recognition, in which it locates reductions and performs interprocedural analysis as part of an array data-flow analysis, as shown in block 316 of Figure 3.

As discussed above, a reduction occurs when a location is updated on each loop iteration, where a commutative and associative operation is applied to that location's previous contents and some data value. In one embodiment, a reduction recognition process recognizes reductions for both scalar and array variables is similar, by taking advantage of the fact that scalar reductions are a degenerate version of array reductions.

The reduction recognition process models a reduction operation as a series of commutative updates. An update operation consists of reading from a location, performing some operation with it, and writing the result back to the same location. A (dynamic) series of instructions contains a reduction operation to a data section r, if all the accesses to locations in r are updates that can commute with each other without changing the program's semantics. Under this definition, it can been seen that the examples above contain a reduction to, respectively, the regions SUM, B[J], B[1:3] and HISTOGRAM[1:M] where M is the size of the array HISTOGRAM.

In one embodiment, this analysis technique is integrated with an interprocedural array data-flow analysis. In general, the reduction analysis is a simple extension of array data-flow analysis. The representation of array sections is common to both array data-flow analysis and array reduction analysis. The basic unit of data representation is a system of integer linear inequalities, whose integer solutions determine array indices of accessed elements. In addition, to the array section descriptor are added all the relationships among scalar variables that involve any of the variables used in the array index calculation. The denoted index tuples can also be viewed as a set of integral points within a polyhedron. The accessed region of an array is represented as a set of such polyhedra. In general, in an n-dimensional loop, there would be an n-dimensional polyhedron. Each processor will keep a local copy of the polyhedron and write results back to a global copy. The simplest case of a polyhedron (1-dimension) is a scalar variable.

In one embodiment, to locate reductions, the reduction recognition process searches for computations that meet the following criteria: (1) the computation is a commutative update to a single memory location A of the form, A = A op ..., where op is one of the commutative operations recognized by the compiler. Currently, the set of such operations includes +, *, MIN, and MAX. The MIN (and similarly, the MAX) reductions of the form "if (A[i] < tmin) tmin = A[i]" are also supported; (2) in the loop, the only other reads and writes to the location referenced by A are also commutative updates of the same type described by op; (3) there are no dependences on any operands of the computation that cannot be eliminated either by a privatization or reduction transformation.

This approach allows any commutative update to an array location to be recognized as a reduction, even without precise information about the values of the array indices, as illustrated in the case of sparse reductions. The reduction recognition correctly determines that updates to HISTOGRAM are reductions, even though HISTOGRAM is indexed by another array A and so the array access functions for HISTOGRAM are not affine expressions.

After reductions are located, an array data-flow analysis is performed. A bottom-up phase of the array data-flow analysis summarizes the data that has been read and data that has been written within each loop and procedure. The bottom-up algorithm analyzes the program starting from the leaf procedures in the call graph and analyzes a region only after analyzing all its subregions (this part of reduction recognition algorithm may apply best to Fortran programs, and this propagation and analysis can only be applied to a subset of non-Fortran programs where one can disambiguate function pointers and the memory aliases on commutative updates). Simple recursions are handled via fixed point calculations. The bottom-up process proceeds from an innermost loop and proceeds outward to the outermost loop, or from a function callee to a caller.

The process computes the union of the array sections to represent the data accessed in a sequence of statements, with or without conditional flow. At loop boundaries, a loop summary is derived by performing the closure operation, which projects away the loop index variables in the array regions. The sections of data accessed in a loop are summarized to eliminate the need to perform n² (pairwise) dependence tests for a loop containing n array accesses. At procedure boundaries, the process performs parameter mapping, and reshaping the array from formal to actual parameter if necessary. At each loop level, a data dependence test and privatization test is applied to the read and written data summaries. If any part of the loop cannot be parallelized, no attempt to parallelize the loop is made if data dependence is indicated, such as if two processors attempting to write to the same location, and no privatization is allowed.

In terms of the data-flow analysis framework, reduction recognition requires only a flow insensitive examination of each loop and each procedure body. This examination is statement-by-statement, without regard to conditional flow. Array reduction recognition is integrated into the array data-flow analysis. Whenever an array element is involved in a commutative update, the array analysis derives the union of the summaries for the read and written sub-arrays and marks the system of inequalities as a reduction of the type described by the operation (op), where op is either +, *, MIN, MAX, or user-specified reductions. When meeting two systems of inequalities during the interval analysis, the resulting system of inequalities will only be marked as a reduction if both reduction types are identical.

In one embodiment, an interprocedural process starts by detecting statements that update a location via an addition, multiplication, minimum, maximum, or user-specified operator. The process keeps track of the operator and the reduction region, which is calculated in the same manner as described above if an array element has been updated. To calculate the reductions carried by a sequence of statements, the process finds the union of the reduction regions for each array and each reduction operation type. The result of the union represents the reduction region for the sequence of statements if it does not overlap with other data regions accessed via non-commutative operations or other commutative operations. At loop boundaries, the process derives a summary of the reduction region by projecting away the loop index variables in the array region. Again, the summary represents the reduction region for the entire loop if it does not overlap with other data regions accessed.

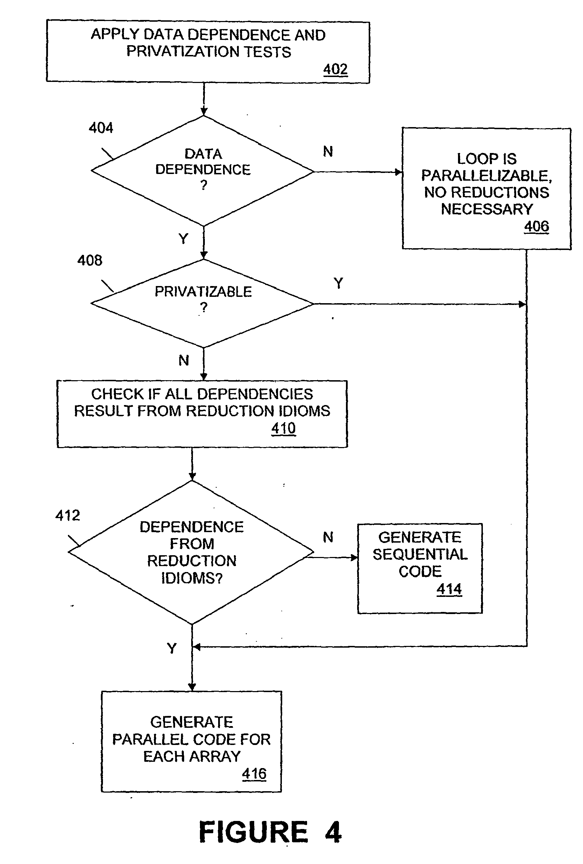

**Figure 4** is a flow diagram that illustrates a method of performing an interprocedural analysis in order to generate parallelized code, under an embodiment, and expands on the process of block 316 in Figure 3. In one embodiment, the process determines if a loop is parallelizable by first applying a data dependence test and a privatization test on the read and write summaries to determine whether there is any dependence, block 402. If, in block 404 it is determined that there is no dependence, the loop is parallelizable and reductions are not necessary, block 406. The process then proceeds to generate parallel code for each array, block 416. If, in block 404 it is determined that there is dependence within the processing loop, the result of the privatization test is used to check if the dependence can be resolved through privatization, as shown in block 408. If so, the loop is parallelizable and parallel code is generated, block 416. If there is data dependence and no privatization, the process checks if all data dependences on an array result from its reduction idioms, block 410. If, in block 412 it is determined that the dependencies do result from the reduction regions, the loop is parallelized by generating parallel reduction code for each such array, block 416; otherwise, the process generates sequential code instead of parallelized code, as shown in block 414.

In the manner described with respect to the illustrated embodiments, a process automatically parallelizes the reduction operations in sequential applications without relying on user directives. Parallel programs generated by a compiler that incorporates embodiments described herein can be executed on cache-coherent, shared address-spaced multiprocessors, as well as any other type of multiprocessor computer system.

Although the present embodiments have been described in connection with a preferred form of practicing them and modifications thereto, those of ordinary skill in the art will understand that many other modifications can be made within the scope of the claims that follow. Accordingly, it is not intended that the scope of the described embodiments in any way be limited by the above description, but instead be determined entirely by reference to the claims that follow. For example, embodiments can be implemented for use on a variety of different multiprocessing systems using different types of CPUs, Furthermore, although embodiments have been described in relations to compilers for translating high level language programs to target binary code for the use with multi-processor computer systems, it should be understood that aspects can apply to any type of language translator that generates parallelized code for execution on a system capable of simultaneous process thread execution. Thus, one or more elements of compiler 104 may be implemented as hardware logic, software modules, or combined hardware-software components. These components may be distributed in one or more functional units that together perform the tasks of translating a high-level user defined program 102 into binary object code 108 capable of being executed on computer 118.

For the purposes of the present description, the term "processor" or "CPU" refers to any machine that is capable of executing a sequence of instructions and should be taken to include, but not be limited to, general purpose microprocessors, special purpose microprocessors, application specific integrated circuits (ASICs), multi-media controllers, digital signal processors, and micro-controllers, etc.

The memory associated with the system illustrated in Figure 1, may be embodied in a variety of different types of memory devices adapted to store digital information, such as static random access memory (SRAM), dynamic random access memory (DRAM), synchronous dynamic random access memory (SDRAM), and/or double data rate (DDR) SDRAM or DRAM, and also non-volatile memory such as read-only memory (ROM). Moreover, the memory devices may further include other storage devices such as hard disk drives, floppy disk drives, optical disk drives, etc., and appropriate interfaces. The system may include suitable interfaces to interface with I/O devices such as disk drives, monitors, keypads, a modem, a printer, or any other type of suitable I/O devices.

Aspects of the methods and systems described herein may be implemented as functionality programmed into any of a variety of circuitry, including programmable logic devices ("PLDs"), such as field programmable gate arrays ("FPGAs"), programmable array logic ("PAL") devices, electrically programmable logic and memory devices and standard cell-based devices, as well as application specific integrated circuits. Implementations may also include microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies, mixed analog and digital, etc.

While the term "component" is generally used herein, it is understood that "component" includes circuitry, components; modules, and/or any combination of circuitry, components, and/or modules as the terms are known in the art. The various components and/or functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list; all of the items in the list; and any combination of the items in the list.

The above description of illustrated embodiments is not intended to be exhaustive or limited by the disclosure. While specific embodiments of, and examples for, the systems and methods are described herein for illustrative purposes, various equivalent modifications are possible, as those skilled in the relevant art will recognize. The teachings provided herein may be applied to other systems and methods, and not only for the systems and methods described above. The elements and acts of the various embodiments described above may be combined to provide further embodiments. These and other changes may be made to methods and systems in light of the above detailed description.

In general, in the following claims, the terms used should not be construed to be limited to the specific embodiments disclosed in the specification and the claims, but should be construed to include all systems and methods that operate under the claims. Accordingly, the method and systems are not limited by the disclosure, but instead the scope is to be determined entirely by the claims. While certain aspects are presented below in certain claim forms, the inventors contemplate the various aspects in any number of claim forms, and reserve the right to add additional claims after filing the application to pursue such additional claim forms for other aspects as well.

## Claims

1. A method of generating parallelized code from a high-level language program, comprising:
parsing the high-level language program to derive parsed code;
verifying the presence of explicit reduction operations in the parsed code;
recognizing implicit reduction operations in the parsed code;
annotating the explicit and implicit reduction operations to conform to an intermediate representation format;
resolving dependencies within one or more processing loops of the parsed code; and
deriving parallelized code for processing loops of the parsed code that contain no unresolved dependencies.

2. The method of claim 1, further comprising defining the intermediate representation format to contain a first address field for a first source address, a second address field for a second source address, a third address field for a destination address, and an operation field for an operation.

3. The method of claim 1, further comprising verifying whether the implicit reduction operations are both associative operations and read-modify-write operations prior to annotating the implicit reduction operations to conform to the intermediate representation format.

4. The method of claim 3, wherein the process of resolving dependencies is an operation selected from a group consisting of: privatizing dependencies among processing threads of the one or more processing loops, and parallelizing reduction idioms within the processing threads; the method further comprising generating sequential binary code for processing loops of the parsed code that contain unresolved dependencies.

5. The method of claim 1, further comprising performing an array data flow analysis to check for dependencies caused by common memory accesses by different processing threads within the one or more processing loops.

6. The method of claim 5, wherein the array data flow analysis comprises:
modeling each reduction operation of the implicit and explicit reduction operations as a series of commutative updates;
representing array sections within the parsed code as a system of integer linear inequalities whose integer solutions determine array indices of accessed elements; and
computing the union of the array sections to represent the data accessed in a series of statements.

7. The method of claim 6, further comprising:
verifying that there are no data dependencies caused by more than one process writing to the same memory location for an array section; and
generating parallelized reduction code for the array section for execution on a multiprocessor computer system.

8. The method of claim 1, wherein the parallelized code is generated by a compiler transforming the high-level program code to a binary target code configured to be executed in multiple processing threads on the multiprocessor computer system.

9. The method of claim 8 wherein at least two processing threads of the multiple processing threads are each configured to execute on a separate microprocessor component in the multiprocessor system.

10. An apparatus comprising:
a plurality of processors, each processor of the plurality of processors configured to execute a separate executable program thread; and
a memory unit configured to store binary code generated by a compiier program, wherein the binary code comprises, explicit and implicit reduction operations represented in a uniform format, wherein each implicit reduction operation is verified to be an associative operation and a read-modify-write-operation, and parallelized reduction code generated for at least two arrays in a high-level language program input to the compiler, wherein the parallelized reduction code consists of a plurality of reduction operations, each comprising a separate executable program thread executed on a respective processor of the plurality of processors.

11. The apparatus of claim 10, wherein the high-level language is selected from the group consisting of: Fortran, C, C++, and a map-reduced language.

12. The apparatus of claim 10, wherein the uniform format comprises a first address field for a first source address, a second address field for a second source address, a third address field for a destination address, and an operation field for an operation.

13. The apparatus of claim 10, wherein the explicit reductions comprise user-defined reductions.

14. The apparatus of claim 10, wherein the implicit reductions are selected from the group consisting of: scalar reductions, regular array reductions, and sparse array reductions.

15. The apparatus of claim 14, wherein the implicit reductions are formatted to conform to a representation corresponding to the explicit reductions.

16. A machine-readable medium having a plurality of instructions stored thereon that, when executed by a processor in a system, perform the operations of:
parsing an input high-level language program to derive parsed code;
verifying the presence of explicit reduction operations in the parsed code;
representing the explicit reduction operations in an intermediate representation;
recognizing implicit reduction operations in the parsed code; and
annotating the implicit reduction operations to conform to the intermediate representation.

17. The machine-readable medium of claim 16, further comprising instructions that perform the operation of defining the intermediate representation to contain a first address field for a first source address, a second address field for a second source address, a third address field for a destination address, and an operation field for an operation.

18. The machine-readable medium of claim 17, further comprising instructions that perform the operation verifying whether the implicit reduction operations are associative and read-modify-write operations.

19. The machine-readable medium of claim 18, further comprising instructions that perform the operations of:
verifying that there are no data dependencies caused by more than one process writing to a same memory location for an array section; and
generating parallelized reduction code for the array section, for execution on a multiprocessor computer system.
